(19) Europäisches Patentamt / European Patent Office / Office européen des brevets

(11) **EP 3 575 884 A1**

(12) **EUROPEAN PATENT APPLICATION**

(43) Date of publication:
04.12.2019 Bulletin 2019/49

(51) Int Cl.:
*G03H 1/00* (2006.01)  *B42D 25/328* (2014.01)
*B42D 25/378* (2014.01)  *B42D 25/30* (2014.01)

(21) Application number: 18305668.8

(22) Date of filing: 31.05.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: **Thales Dis France SA**
**92190 Meudon (FR)**

(72) Inventors:
• QUIRICONI, Jean-Remi
92190 Meudon (FR)
• CHARBONNIER, Emilien
92190 Meudon (FR)

(74) Representative: **Thomas, Christine Marie**
**Catherine**
**Thales Dis France SA**
**Intellectual Property Department**
**6, rue de la Verrerie**
**92190 Meudon (FR)**

(54) **METHOD TO REMOTELY AUTHENTICATE AN OFFICIAL DOCUMENT**

(57)    The present invention relates to a method to remotely check the authenticity of an official document (OD) including an optically variable area (OVA) using a mobile device (MD) of a user (USR) adapted to take a picture of the official document (OD), including the following steps of requesting the user (USR) to take and send several pictures (ScSi) of the official document (OD) at several angles and/or several light conditions, calculating an Euclidian distance ($\Delta COL_{i,j}(P)$) between the color values (COL) of a plurality of pairs of corresponding pixels ($P_i, P_j$) of each pair of pictures ($ScSi, ScSj$), comparing the Euclidian distances ($\Delta COL_{i,j}(P)$) to predetermined thresholds, detecting the authenticity of the official document (OD) on the base of the result of the comparison, the Euclidian distances ($\Delta COL_{i,j}(P)$) having to be higher than the predetermined thresholds for the pictured official document (OD) to be considered as genuine.

FIG.1

EP 3 575 884 A1

**Description**

**FIELD OF THE INVENTION**

The present invention relates to a method to remotely check the authenticity of an official document of a user having a mobile device to take pictures.

The invention also pertains to a device implementing said method.

**BACKGROUND OF THE INVENTION**

It is not currently possible to detect secured features stored on an official document like an ID Card or a Passport by capturing the document through a handset camera. The camera is getting too low quality.

The secured features are typically Optically Variable Inks and Holograms, forming optically variable area. It is well known that IR or UV capabilities enable detection of such secured features. However such capabilities are not offered by mobile devices generally used by end users.

None of the existing mobile product implementing ID Verification solution (KYC) on the market thus has such the functionality to check the authenticity of an official document.

One of the consequences is that it is not possible to easily detect photocopies of official documents.

This is a real problem today as the level of fraud detection of Fake ID and photocopies is pretty low on the market.

Further alternative and advantageous solutions would, accordingly, be desirable in the art to enable the ID Verification / KYC solution on mobile, also named Level 1 detection.

**SUMMARY OF THE INVENTION**

The present invention is defined, in its broadest sense, as a method to remotely check the authenticity of an official document including an optically variable area using a mobile device of a user adapted to take a picture of the official document, including the following steps of:

- sending a request to the mobile device of the user for the user to take and send several pictures of the official document at several angles and/or several light conditions using the mobile device;
- receiving the requested pictures from the mobile device;
- parsing each pixel of a bitmap area including optically variable area for each picture;
- extracting a color value for each pixel of the bitmap area of each picture;
- calculating an Euclidian distance between the color values of a plurality of pairs of corresponding pixels of each pair of pictures;
- comparing the Euclidian distances to predetermined thresholds, Euclidian distance of selected bitmap areas being compared between each picture taken with different angles and/or with different light conditions;
- detecting the authenticity of the official document on the base of the result of the comparison, the Euclidian distances having to be higher than the predetermined thresholds for the pictured official document to be considered as genuine.

The invention gives the ability to verify user identity by capturing ID or Passports through the mobile camera to be then verified by a backend service. It solves a strong product issue on the market today. The invention enables to detect photocopies during an ID Verification on mobile and it improves the fake ID documents detection on mobile.

According to the invention, the end user is prompted to take multiple screenshots of the ID Card at different angles in order to get different lightings of the ID Card. Other different lighting conditions can also be requested, like photos with or without flashlight of the camera.

Considering that a color variation is dependent of the calculation of a Euclidian distance between two pixels colors, it is possible to determine if two pixels are having the same color by comparing two pictures. Then the invention is based on the calculation of a color difference of each pixels of a bitmap area containing the Optically Variable ink or Hologram, in comparison with the other picture taken in another angle or other lighting condition.

By comparing multiple picture angles, it is possible to detect strong variation of the color value if the area is containing a security feature. If the variation of the color value is low, the document is detected as a photocopy of document is fake. Thus, in the invention, if the calculated Euclidian distance between the different snapshots is lower than a predetermined threshold, optically variable ink or Holograms are not detected and document is not considered as genuine.

The invention has the advantage to be independent from the device taking the snapshots as far as a standard camera is available at the mobile device. Such a standard camera is sufficient to take the different expected snapshots using the mobile device.

In an embodiment, the optically variable area is a hologram or an optically variable ink.

Such optically variable area are well known features used on official documents and well adapted to the use of the invention. A hologram will indeed appear different depending on the angle of view, one pixel will thus have different color value depending on the angle of view and an optically variable ink appears different depending on the angle of view and on the lighting conditions.

Advantageously, the color value comprises at least three coordinates: one luminance and two color channels.

Those coordinates are known in the field of colorimetry and are adapted to calculate a Euclidian distance of the color values between two pixels.

According to a specific embodiment, the method further comprises a step of selecting pixels among pixels of the bitmap area containing the optically variable area, the obtained selection of pixels being then the ones of which Euclidian distances are calculated and used to detect the authenticity of the official document.

Such a selection is useful to reduce the number of pixel on which the analysis is to be done in an expected optically variable area. This enables to make the analysis faster.

According to a specific feature, the selection is randomly performed.

Such a random selection enables to have an automatic and diversified selection from one authentication according to the invention to the other. Of course in one given authentication, pixels of which the Euclidian distance is calculated are the corresponding ones from one image to the other.

Advantageously, the selection comprises a percentage included between 20 and 50% of the total number of pixels.

Such a selection enables to obtain a correct quality in the detection of a fake document while investigating the optically variable area without harming the rapidity of the detection.

The present invention also relates to a verification device implementing the method of the invention, said verification device comprising a communication module able to send and receive messages to and from a mobile device adapted to take pictures of an official document and a verification application adapted to perform the steps of the method of the invention and to issue a verification status of a pictured official document.

Such a device remotely checks the authenticity of an official document present in the vicinity of the mobile device of the end user.

The invention also relates to a mobile device to capture pictures to be used for the method of the invention, comprising at least a communication module able to send and receive messages from a verification device and a document authenticity verification application adapted to prompt a user of the mobile device to take pictures of an official document with at least two different angles relative to the official document.

Such a mobile device enables the verification device to receive the pictures necessary for the implementation of the invention.

According to an advantageous embodiment, the mobile device further comprises an activity tracking module, said activity tracking module being triggered once the request is received from the verification device to detect that the pictures' capture is done in real time by the user in cooperation with the document authenticity verification application.

Such a feature enables to check that the user does not use previously acquired pictures of an official document that he/she does not have anymore under his/her eyes or that he/she does not use a picture that has been modified to comprise picture's shares providing from several different documents.

Advantageously, the mobile device further comprises a gyroscopic module adapted to detect the relative angular position of the mobile device and such that the document authenticity application further interacts with the gyroscopic module to detect the relative position of the mobile device itself relative to a plan where the official document lays and monitoring the capture of picture by automatically shooting the official document or by requesting a shoot of the official document to be done by the user once the correct requested angle of capture is detected by the gyroscopic module.

This feature enables an automatic capture or a support/guidance in the pictures' capture for the user.

To the accomplishment of the foregoing and related ends, one or more embodiments comprise the features hereinafter fully described and particularly pointed out in the claims.

## BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

- Figure 1 schematically illustrates the principle of the invention;
- Figure 2 schematically represents the two devices of the invention, the verification device and the mobile device according to the preferred embodiment of the invention;

- Figure 3 shows a diagram sequence between the entities involved in the method of the invention;
- Figure 4 shows the calculation of color parameters for two corresponding pixels, each originated from one of two screenshots taken according to the method of the invention.

## DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

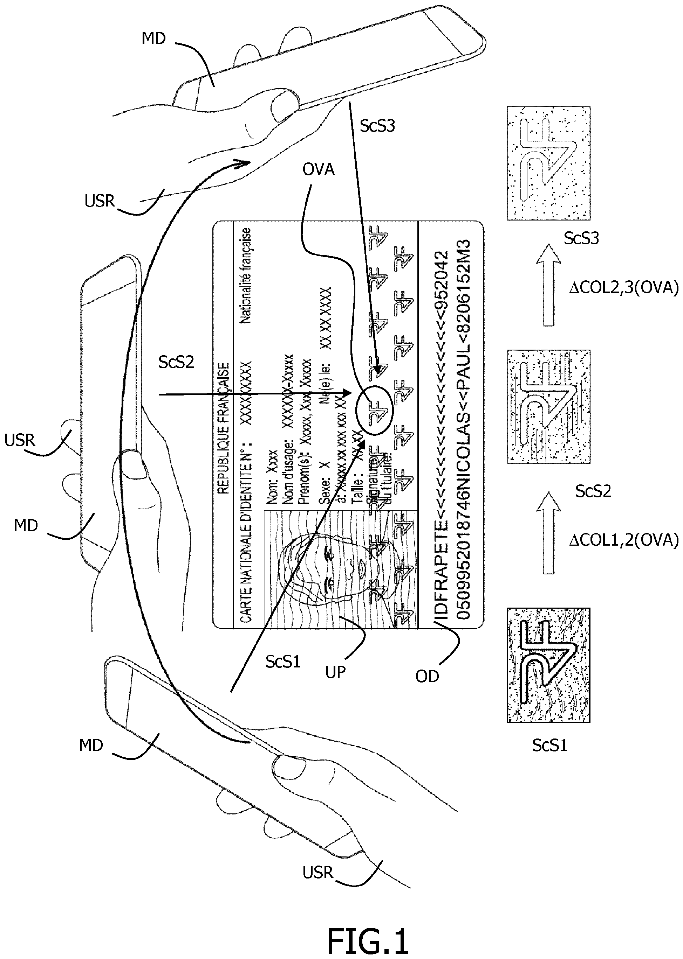

Figure 1 schematically illustrates the principle of the invention. The objective is to check the authenticity of an official document OD including at least one security features of the kind of an optically variable area OVA, here a logo RF repeated several times on the official document OD.

The invention resides in prompting a user USR to use his/her mobile device MD to take several pictures, here 3, of his/her official device at different angles or different lighting conditions. To prompt the user, a picture explaining the actions to be done is for example displayed on a screen of the mobile device MD of the user USR. Such a display is proposed directly on the mobile device MD that will be used to take the pictures itself. It presents specific advantages as the mobile device MD is in this case the one receiving the request from a verification device VD, the one that captures the pictures and the one that send them to the verification device. A tracking of the activity on such a mobile device MD once the request is received from the verification device VD implementing the invention enables to detect that the pictures' capture is done in real time by the user USR.

In a specific embodiment, the mobile device MD can include a dedicated application triggered by the user USR in order for him to take the requested pictures and to send them to a verification device or entity. The user USR can be prompted to take two pictures of the official document, one with the flashlight and the second one without the flashlight. It can also be prompted to take three pictures at three different angles. This embodiment is the one illustrated on figure 1. Any combination of the two kinds of situations, lightings and view angles, is possible according to the invention.

On figure 1, the user USR has been prompted to take three pictures ScS1, ScS2 and ScS3 of his identity card OD at three different angles. The identity card OD has several optically variable areas OVA visible on the taken pictures. According to the invention, only one optically variable area OVA, thus one logo RF, can be investigated or several of them can be used. It can also be contemplated to consider the whole set of logos RF as being a single optically variable area OVA. It is here noted that only a part of the taken pictures, the one comprising the RF logo, is represented on figure 1 as a larger part of the official document is visible enabling to see the photo UP of the user USR and other personalized data as presented on the official document OD.

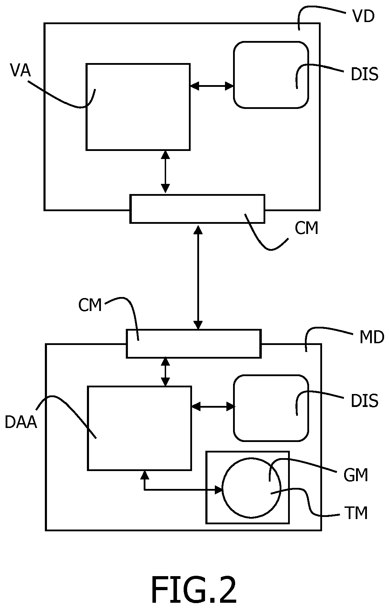

Figure 2 shows schematically the two devices implicated in the invention. A verification VD comprises at least a communication module CM able to send and receive messages from a mobile device MD having itself also a communication module CM for the same functionalities with the verification device VD.

The verification device VD further comprises a verification application VA to implement the steps of the method according to the method of the invention. It may advantageously comprise a display DIS, for example a screen, for a verifier to check the status of the verification.

The mobile device MD is here disclosed according to the preferred embodiment of the invention where it is adapted to communicate with the verification device VD, to capture the pictures of the official document OD and to send the pictures to the verification device VD. It thus comprises a document authentication application DAA to monitor all the above mentioned steps.

Advantageously it further comprises a gyroscopic module GM to interact with the document authentication application DAA in order to detect the relative position of the mobile device MD relative to a plan on which the official document lays. Those interaction enable the application to request the user to take a screenshot or a photo of the official document once the requested correct relative position is detected or to directly automatically take a screenshot or a photo of the official document once the correct relative position is detected relative to, for example, an horizontal plan on which the official document OD would have been positioned.

Advantageously, the mobile device MD also comprises an activity tracking module TM to track the activity on the mobile device MD to detect any fake or pre-acquired pictures to be sent by the user instead of the ones required by the invention.

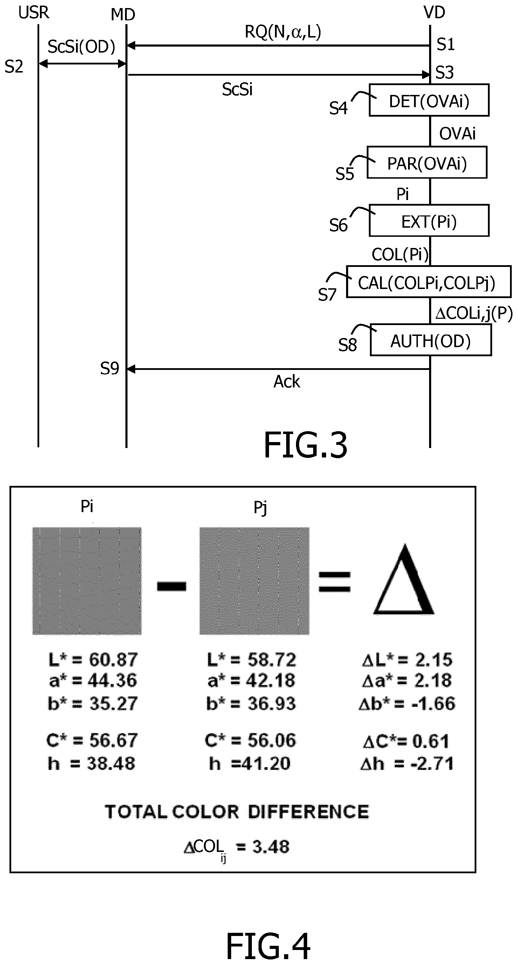

Figure 3 show a sequence diagram of the method of the invention in the case where the user USR is prompted directly by a verification device VD on his/her mobile MD to take the different pictures necessary for the method of the invention. In a first step S1, the verification device VD sends a request RQ(N,$\alpha$,L) to the mobile device MD of the user USR who is in a verification process with an external entity which triggered the verification of an official document OD. Such an external entity can be a bank, a registration entity or any other administrative entity.

The request RQ comprises a number N of pictures ScS to be taken, typically screenshots in case of a smartphone or a tablet or photos in case of a digital camera, to be acquired by the user USR. The request RQ comprises several angles $\alpha$ as instructions to shoot the official document OD and/or several lighting conditions L.

In a second step S2, the user USR acquires the N screenshots according to the principle as shown on figure 1 while respecting the different instructions as listed in the request RQ.

Once the N screenshots are acquired on the mobile device MD, they are sent to the verification device VD in a step S3.

The N screenshots are then analyzed in order to parse the pixels of a bitmap area including optically variable area. At this level, the totality of the bitmap can be analyzed or only the parts where an optically variable area OVA is expected according to a predefined canvas depending on the type of official document OD which can besides be announced by the user USR while sending the screenshots ScS.

Otherwise, advantageously, a step S4 of detection of the expected optically variable areas OVA is performed. It can be a search of a specific logo, like the RF one in the example presented on figure 1.

Then each pixels Pi of the identified optically variable areas OVAi are parsed in a step S5. Then a color value COL(Pi) is extracted in a step S6 and an Euclidian distance $\Delta$COLi,j(P) is calculated for the pixel P in a step S7 between the pixel Pi of the optically variable area OVAi and the corresponding pixel Pj of the optically variable area OVAj. When three screenshots i, j, k are acquired, at least two other Euclidian distances $\Delta$ COLk,j(P) $\Delta$COLi,k(P) are available for this pixel P. The verification application VA in the verification device VD can however choose to use only two pairs of pictures as it appears on the illustrative of figure 1: $\Delta$COL1,2(OVA) and $\Delta$COL2,3(OVA). In the example the pixels P of the optically variable area OVA are all together grouped in the Euclidian distance as calculated. Several implementation are here possible in terms of calculation of the Euclidian for single pixels before comparison or for a group of pixels before comparison without departing from the principle of the invention.

Euclidian distances $\Delta$COLi,j(P) as calculated are then used in a step S8 of authentication of the official document OD by the verification device VD which can then make an acknowledgment message Ack to the mobile device MD in a step S9 stating the success or the failure of the verification.

In an advantageous implementation, it is considered that a color variation is dependent of the Euclidian distance between two colors in the same range.

Color components are schematically shown on figure 4.

$$\Delta COLi,j(P) = \sqrt{\left(L_j^* - L_i^*\right)^2 + \left(a_j^* - a_i^*\right)^2 + \left(b_j^* - b_i^*\right)^2}$$

If the Euclidian distance thus calculated is set to 0 or lower than a threshold value, then no color variation is observed on security feature present in the optically variable area and the document is detected as a photocopy or as a fake document.

If the Euclidian distance is higher than a threshold, a color variation is observed on security feature and the document is detected to be a genuine one. The threshold is typically a value which can be updated in the settings of the algorithm. This parameter may vary depending on the camera sensor quality. Value could be set to 0,2 for instance. It is here noted that color variation may also be different depending on the light conditions while taking the official document pictures, hence the threshold parameter is quite important to be as precise as possible and thus avoid any false positive / false negative. It is adapted depending on the official document type which is pictured and/or the conditions in which the pictures are requested to be taken.

In the above detailed description, reference is made to the accompanying drawings that show, by way of illustration, specific embodiments in which the invention may be practiced. These embodiments are described in sufficient detail to enable those skilled in the art to practice the invention.

**Claims**

**1.** Method to remotely check the authenticity of an official document (OD) including an optically variable area (OVA) using a mobile device (MD) of a user (USR) adapted to take a picture of the official document (OD), including the following steps of:

- sending a request to the mobile device (MD) of the user (USR) for the user (USR) to take and send several pictures (ScSi) of the official document (OD) at several angles and/or several light conditions using the mobile device (MD);
- receiving the requested pictures (ScSi) from the mobile device (MD);
- parsing each pixel (Pi) of a bitmap area including optically variable area (OVA) for each picture (ScSi);
- extracting a color value (COLPi) for each pixel (Pi) of the bitmap area of each picture (ScSi);
- calculating an Euclidian distance ($\Delta$COLi,j(P)) between the color values (COL) of a plurality of pairs of corresponding pixels (Pi,Pj) of each pair of pictures (ScSi,ScSj);
- comparing the Euclidian distances ($\Delta$COLi,j(P)) to predetermined thresholds, Euclidian distance ($\Delta$COLi,j(P)) of selected bitmap areas being compared between each picture (P) taken with different angles and/or with different light conditions;
- detecting the authenticity of the official document (OD) on the base of the result of the comparison, the Euclidian distances ($\Delta$COLi,j(P)) having to be higher than the predetermined thresholds for the pictured official document (OD) to be considered as genuine.

2. Method according to claim 1, wherein the optically variable area (OVA) is a hologram or an optically variable ink.

3. Method according to one of claims 1 and 2, wherein the color value (COL) comprises at least three coordinates: one luminance and two color channels.

4. Method according to one of preceding claims, comprising a step of selecting pixels among pixels of the bitmap area containing the optically variable area (OVA), the obtained selection of pixels being then the ones of which Euclidian distances ($\Delta$COLi,j(P)) are calculated and used to detect the authenticity of the official document (OD).

5. Method according to claim 4, wherein the selection is randomly performed.

6. Method according to one of claims 4 or 5, wherein the selection comprises a percentage included between 20 and 50% of the total number of pixels.

7. Verification device (VD) implementing the method of one of the preceding claims, said verification device comprising a communication module (CM) able to send and receive messages to and from a mobile device (MD) adapted to take pictures (ScSi) of an official document (OD) and a verification application (VA) adapted to perform the steps of the method of one of the preceding claims and to issue a verification status of a pictured official document (OD).

8. Mobile device (MD) to capture pictures (ScSi) to be used for the method as claimed in one of claims 1 to 6, comprising at least a communication module (CM) able to send and receive messages from a verification device (VD) and a document authenticity verification application (DAA) adapted to prompt a user (USR) of the mobile device (MD) to take pictures of an official document (OD) with at least two different angles relative to the official document (OD).

9. Mobile device according to claim 8, further comprising an activity tracking module (TM), said activity tracking module (TM) being triggered once the request is received from the verification device (VD) to detect that the pictures' capture is done in real time by the user (USR) in cooperation with the document authenticity verification application (DAA).

10. Mobile device (MD) as defined in one of claims 8 and 9, said mobile device (MD) being such that it further comprises a gyroscopic module (GM) adapted to detect the relative angular position of the mobile device (MD) and such that the document authenticity application (DAA) further interacts with the gyroscopic module (GM) to detect the relative position of the mobile device (MD) itself relative to a plan where the official document (OD) lays and monitoring the capture of picture (ScSi) by automatically shooting the official document (OD) or by requesting a shoot of the official document (OD) to be done by the user (USR) once the correct requested angle of capture is detected by the gyroscopic module (GM).

FIG.1

FIG.2

FIG.3

Pi

L* = 60.87
a* = 44.36
b* = 35.27

C* = 56.67
h = 38.48

Pj

L* = 58.72
a* = 42.18
b* = 36.93

C* = 56.06
h =41.20

$\Delta$L* = 2.15
$\Delta$a* = 2.18
$\Delta$b* = -1.66

$\Delta$C* = 0.61
$\Delta$h = -2.71

TOTAL COLOR DIFFERENCE

$\Delta COL_{ij}$ = 3.48

FIG.4

**Europäisches Patentamt**

**European Patent Office**

**Office européen des brevets**

# EUROPEAN SEARCH REPORT

Application Number

EP 18 30 5668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/253857 A1 (HEUSCH GUILLAUME [CH]) 1 September 2016 (2016-09-01) | 1-4,6-10 | INV. G03H1/00 B42D25/328 B42D25/378 B42D25/30 |
| Y | * paragraphs [0006], [0031] - [0049] * | 5 | |
| X | WO 2014/092193 A1 (QONCEPT INC [JP]) 19 June 2014 (2014-06-19) * paragraphs [0185] - [0231] * | 1-3,6-10 | |
| Y | US 2005/038756 A1 (NAGEL ROBERT H [US]) 17 February 2005 (2005-02-17) * paragraphs [0166], [0220] * | 5 | |

TECHNICAL FIELDS SEARCHED (IPC)

G03H
B42D

The present search report has been drawn up for all claims

| Place of search | Date of completion of the search | Examiner |
|---|---|---|
| Munich | 4 October 2018 | Rey, Salvador |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                              
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 5668

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2018

| Patent document cited in search report | | | Publication date | Patent family member(s) | | | Publication date |
|---|---|---|---|---|---|---|---|
| US 2016253857 | A1 | | 01-09-2016 | AR | 098004 | A1 | 27-04-2016 |
| | | | | BR | 112016006391 | A2 | 01-08-2017 |
| | | | | CN | 105706147 | A | 22-06-2016 |
| | | | | EP | 3055839 | A1 | 17-08-2016 |
| | | | | GE | P201706782 | B | 27-11-2017 |
| | | | | RU | 2016117966 | A | 16-11-2017 |
| | | | | US | 2016253857 | A1 | 01-09-2016 |
| | | | | WO | 2015052318 | A1 | 16-04-2015 |
| WO 2014092193 | A1 | | 19-06-2014 | NONE | | | |
| US 2005038756 | A1 | | 17-02-2005 | AU | 6482101 | A | 03-12-2001 |
| | | | | BR | 0111274 | A | 10-06-2003 |
| | | | | CA | 2410089 | A1 | 29-11-2001 |
| | | | | CN | 1441935 | A | 10-09-2003 |
| | | | | CR | 6831 | A | 31-07-2003 |
| | | | | EP | 1307840 | A1 | 07-05-2003 |
| | | | | IL | 152952 | A | 31-10-2007 |
| | | | | IL | 179225 | A | 18-11-2009 |
| | | | | JP | 2003534753 | A | 18-11-2003 |
| | | | | KR | 20030019398 | A | 06-03-2003 |
| | | | | RU | 2002134748 | A | 20-04-2004 |
| | | | | SG | 94778 | A1 | 18-03-2003 |
| | | | | US | 7152047 | B1 | 19-12-2006 |
| | | | | US | 2005038756 | A1 | 17-02-2005 |
| | | | | WO | 0191007 | A1 | 29-11-2001 |

EPO FORM P0459

For more details about this annex : see Official Journal of the European Patent Office, No. 12/82